(19) Europäisches Patentamt
European Patent Office
Office européen des brevets

(11) **EP 1 650 539 B1**

(12) **EUROPÄISCHE PATENTSCHRIFT**

(45) Veröffentlichungstag und Bekanntmachung des Hinweises auf die Patenterteilung:
**26.09.2007 Patentblatt 2007/39**

(51) Int Cl.:
*G01K 13/02* (2006.01)    *G01K 7/42* (2006.01)
*G01N 25/18* (2006.01)

(21) Anmeldenummer: **05109473.8**

(22) Anmeldetag: **12.10.2005**

(54) **Vorrichtung zur schnellen Messung von Temperaturen in einem Heissgasstrom**

Apparatus for the rapid measurement of temperatures in a hot gas flow

Dispositif pour la mesure rapide de températures dans un courant de gaz chaud

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **25.10.2004 CH 17582004**

(43) Veröffentlichungstag der Anmeldung:
**26.04.2006 Patentblatt 2006/17**

(73) Patentinhaber: **Alstom Technology Ltd 5400 Baden (CH)**

(72) Erfinder:
• **Ruffino, Paolo**
  **5507, Mellingen (CH)**
• **Zinn, Hanspeter**
  **5406, Baden-Rütihof (CH)**

(56) Entgegenhaltungen:
**EP-A- 0 878 707        US-A- 3 828 332
US-B2- 6 609 412**

**Beschreibung**

TECHNISCHES GEBIET

Die vorliegende Erfindung bezieht sich auf das Gebiet der Temperaturmesstechnik. Sie betrifft eine Vorrichtung zur schnellen Messung von Temperaturen in einem Heissgasstrom.

STAND DER TECHNIK

In einer Gasturbine ist es von zentraler Bedeutung, die Temperaturverteilung im Heissgasstrom am Turbinenaustritt zu bestimmen, da durch diese Temperaturverteilung der Wirkungsgrad der gesamten Gasturbine beeinflusst wird. Insbesondere ist diese Temperaturverteilung entscheidend für eine Verbesserung in der Auslegung der Turbine und für die Steuerung des Turbinenbetriebes. Speziell im Bezug auf die Turbinensteuerung ist es bekannt, dass die Zeitkonstante der derzeit im Einsatz befindlichen, mit Thermoelementen arbeitenden TAT-Messwertaufnehmer (TAT = Turbinen-Austritts-Temperatur) grösser als eine Sekunde (ca. 3 s) beträgt, während die Zeitkonstante der Turbinenschaufeln unterhalb einer Sekunde liegt. Hieraus ergibt sich ein Risiko der Beschädigung der ersten Turbinenstufen, weil die Thermoelemente eine thermische Überlastung nicht mit der nötigen Schnelligkeit erkennen können. Darüber hinaus führt bei Messwertaufnehmern auf der Basis von Thermoelementen jeder Versuch einer Erhöhung der Zeitantwort unausweichlich zu einer Verringerung der Lebensdauer.

DARSTELLUNG DER ERFINDUNG

Es ist daher Aufgabe der Erfindung, eine Vorrichtung zur Messung von Temperaturen in einem Heissgasstrom, insbesondere einer Gasturbine, zu schaffen, welche sich bei hoher Zuverlässigkeit, einfachem Aufbau, guter Genauigkeit und flexibler Einsetzbarkeit durch eine deutlich verkleinerte Zeitkonstante auszeichnet.
Die Aufgabe wird durch die Gesamtheit der Merkmale des Anspruchs 1 gelöst.
Der Kern der Erfindung besteht darin, einen Sensor mit zwei flächigen, elektrisch leitenden Heizelemente vorzusehen, welche auf der Oberfläche eines gemeinsamen, elektrisch isolierenden Sensorkörpers angebracht sind. Diese beiden Heizelemente können mit einem zusätzlichen Verbindungswiderstand in einen Zweig einer Brückenschaltung eingebaut werden, wie sie beispielsweise aus der Fig. 5 der US-B2-6,609,412 bekannt ist. In dieser Schaltung werden die beiden Heizelemente auf unterschiedliche Temperaturen aufgeheizt und mittels einer Regelschaltung wird der Widerstand des Brückenzweiges mit den Heizelementen konstant gehalten. Die Gastemperatur kann dann mittels einer linearen Gleichung aus dem Verhältnis der Spannungsabfälle am kälteren Heizelement und dem Verbindungswiderstand ermittelt werden.
Strömungstechnisch besonders günstig und aufgrund der mechanischen Stabilität für die hohen Strömungsgeschwindigkeiten in einer Gasturbine besonders geeignet ist eine Ausgestaltung der Erfindung, bei welcher der Sensorkörper zylindrisch ausgebildet ist und sich entlang einer Achse erstreckt, und die Heizelemente auf der Zylinderfläche des Sensorkörpers im Bezug auf die Achse auf gegenüberliegenden Seiten angeordnet und als längliche, sich in axialer Richtung erstreckende, dünne Schichten ausgebildet sind. Vorzugsweise sind die Heizelemente als dünne Metallschichten, insbesondere aus Pt, ausgebildet.
Im Bezug auf den Einsatz als Brückenzweig einer Messschaltung ist es besonders vorteilhaft, wenn die Heizelemente an dem einen Ende miteinander elektrisch leitend verbunden sind. Besonders einfach und zuverlässig ist diese Verbindung, wenn der Sensorkörper an dem einen Ende durch einen elektrisch leitenden Sensorkopf, insbesondere aus Cu, abgeschlossen ist, und die Heizelemente über den Sensorkopf miteinander elektrisch leitend verbunden sind.
Der Sensorkörper, der als Vollkörper oder als Rohr ausgebildet sein kann, besteht vorzugsweise aus einer Keramik.
Die Messgenauigkeit und Stabilität der Vorrichtung kann dadurch weiter verbessert werden, dass der Sensor mit Abstand konzentrisch von einem Strahlungsschutzschild umgeben ist, welcher zusammen mit dem Sensor einen Ringkanal bildet, durch den das zu messende Gas an den Heizelementen vorbeigeführt wird.
Die elektrische Schaltung wird dadurch weiter vereinfacht, dass der Strahlungsschutzschild elektrisch leitend ausgebildet ist und zur Erdung des Sensorkopfes mit dem Sensorkopf elektrisch leitend verbunden ist.
Damit der Sensor an einem Grundkörper befestigt werden kann, ist der Ringkanal an einem Ende vorzugsweise geschlossen. Das zu messende Heissgas tritt durch das offene Ende in den Ringkanal ein. Am geschlossenen Ende des Ringkanals sind dann Austrittsöffnungen im Strahlungsschutzschild für den Austritt des Heissgases vorgesehen.
Zur Messung der Gastemperatur ist es besonders vorteilhaft, wenn die Heizelemente am einen Ende direkt und am anderen Ende über einen ersten Widerstand miteinander leitend verbunden sind, und wenn die Schaltung aus den Heizelementen und dem Widerstand einen Zweig einer Messbrücke bildet.
Die Messbrücke ist vorzugsweise Teil einer Schaltungsanordnung, welche den Widerstand in dem Zweig der Messbrücke konstant hält, der aus den Heizelementen und dem ersten Widerstand besteht. Insbesondere umfasst die Schaltungsanordnung eine Regelschaltung, welche den Strom in einer Brückendiagonalen so einregelt, dass die Spannungsdifferenz in der anderen Brückdiagonalen verschwindet.

KURZE ERLÄUTERUNG DER FIGUREN

Die Erfindung soll nachfolgend anhand von Ausführungsbeispielen im Zusammenhang mit der Zeichnung näher erläutert werden. Es zeigen

Fig. 1    eine an sich bekannte beispielhafte Schaltungsanordnung, in welcher der Sensor nach der Erfindung eingesetzt werden kann

Fig. 2    einen Sensor zur Messung der Heissgastemperatur einer Gasturbine gemäss einem bevorzugten Ausführungsbeispiel der Erfindung in der perspektivischen Seitenansicht (Fig. 2a) und im Querschnitt (Fig. 2b);

Fig. 3    einen ersten Temperaturfühler mit einem Sensor nach Fig. 2 in der Draufsicht von oben (Fig. 3a) und in teilweise geschnittener Seitenansicht (Fig. 3b); und

Fig. 4    einen zweiten Temperaturfühler mit einem Sensor nach Fig. 2 in der Draufsicht von oben (Fig. 4a) und in teilweise geschnittener Seitenansicht (Fig. 4b).

WEGE ZUR AUSFÜHRUNG DER ERFINDUNG

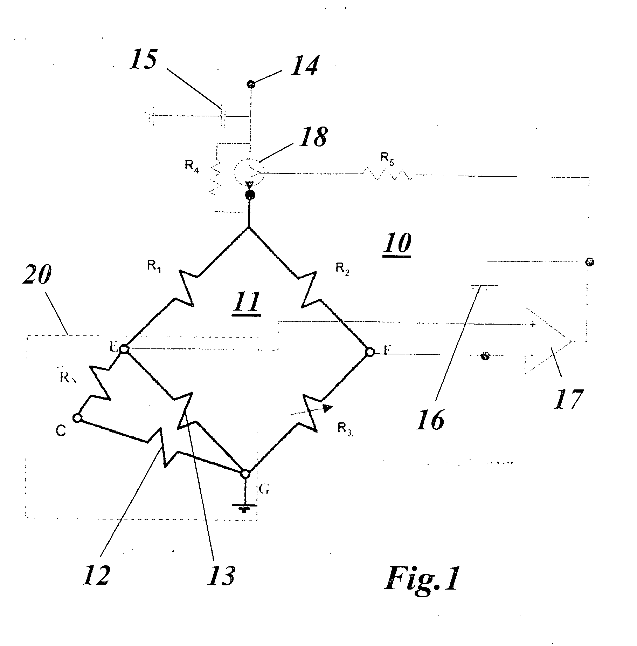

In Fig. 1 ist eine an sich aus der US-B2-6,609,412 bekannte Schaltungsanordnung bzw. Messschaltung 10 wiedergegeben, die im Zusammenhang mit dem erfindungsgemässen Sensor zur Messung der Heissgastemperatur, insbesondere in einer Gasturbine, eingesetzt werden kann. Die Schaltungsanordnung 10 umfasst eine Messbrücke mit vier Brückenzweigen, von denen drei durch die Widerstände $R_1$, $R_2$ und $R_3$ gebildet werden. Widerstand $R_3$ ist zur Abstimmung der Brücke verstellbar ausgelegt. Der vierte Brückenzweig wird durch zwei Heizelemente 12 und 13 gebildet, die am einen Ende direkt und am anderen über einen weiteren Widerstand $R_N$ miteinander verbunden sind. Der Punkt G der Messbrücke 11, an dem die beiden Heizelemente 12, 13 direkt miteinander verbunden sind, ist geerdet. Der dem Punkt G diagonal gegenüberliegende Punkt der Messbrücke 11 ist über die Kollektor-Emitterstrecke eines Transistors 18 mit einem Versorgungsanschluss 14 verbunden, an dem im Betrieb die Versorgungsspannung anliegt. Die beiden anderen diagonal gegenüberliegenden Punkte E und F der Messbrücke 11 sind mit den Eingängen eines Operationsverstärkers 17 verbunden, dessen Ausgang über einen Widerstand $R_5$ die Basis des Transistors 18 ansteuert. Ein weiterer Widerstand $R_4$ zwischen Kollektor und Emitter des Transistors 18 und zwei Kondensatoren 15, 16 zur Unterdrückung von Störungen vervollständigen die Schaltung. Der Transistor 18 lässt aufgrund der Ansteuerung durch den Operationsverstärker 17 einen Strom durch die Messbrücke 11 fliessen, der gerade so gross ist, dass die Spannungsdifferenz $\Delta V_{EF}$ zwischen den Punkten E und F der Brücke Null ist. Da die Widerstände $R_1$, $R_2$ und $R_3$ während des Betriebes konstant sind, ist damit auch der Widerstand im vierten Brückenzweig mit den Heizelementen 12 und 13 konstant. Gleichzeitig wird - bei gleichartigen Heizelementen 12 und 13, durch den Widerstand $R_N$ sichergestellt, dass durch das Heizelement 12 weniger Strom fliesst, als durch das Heizelement 13. Entsprechend ist das Heizelement 12 das "kalte" Heizelement, während das Heizelement 13 das "heisse" Heizelement ist.

Wie in der weiter oben zitierten Druckschrift US-B2-6,609,412 im Detail erklärt ist, kann mittels der in Fig. 1 dargestellten Schaltungsanordnung 10 die Temperatur $T_G$ eines an den beiden Heizelementen 12, 13 vorbeiströmenden Gases aus der Gleichung

$$T_G = \alpha \cdot R_1 \cdot w - \beta \cdot R_1 \qquad \alpha, \beta \text{ Konstanten}$$

mit

$$w = \Delta V_{CG} / \Delta V_{EC},$$

wobei die Spannung $\Delta V_{CG}$ zwischen den Punkten C und G am Heizelement 12, und die Spannung $\Delta V_{EC}$ zwischen den Punkten E und C am Widerstand $R_N$ abfällt.

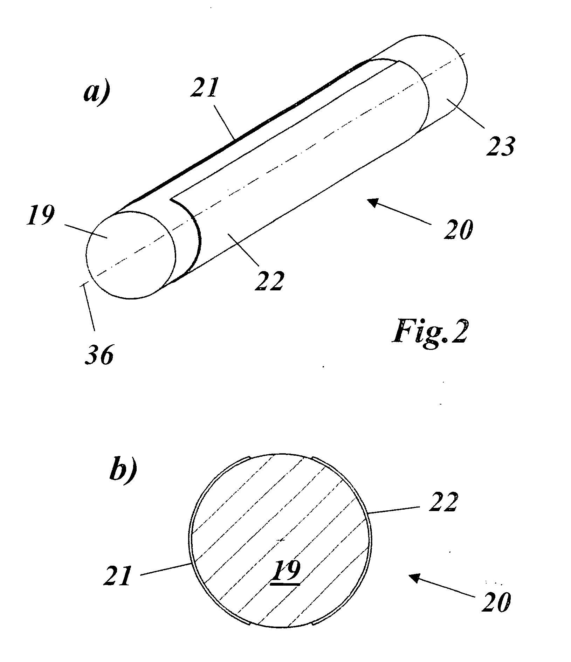

Der Einsatz im Heissgasstrom einer Gasturbine stellt nun besondere Anforderungen an die beiden Heizelemente 12 und 13, die Teil eines Sensors 20 sind (gestrichelter Kasten in Fig. 1; der Widerstand $R_N$ gehört selbst nicht zum Sensor 20, sondern ist Teil der übrigen Schaltungsanordnung, die sich ausserhalb des Einsatzortes befindet). Der Aufbau des Sensors 20 hat vorzugsweise die in Fig. 2 dargestellte Gestaltung: Auf einen sich entlang einer Achse 36 erstreckenden voll- oder hohlzylindrischen Sensorkörper 19, der bevorzugt aus einer elektrisch isolierenden, für die hohen Temperaturen geeigneten Keramik besteht, sind auf gegenüberliegenden Seiten zwei dünne Metallschichten 21, 22 aus Platin (Pt) aufgebracht. Platin ist grundsätzlich bis zu Temperaturen von ca. 1700°C einsetzbar. Die Metallschichten 21, 22 bilden in ihrer axialen Erstreckung die beiden Heizelemente 12, 13 des Sensors 20. Sie sind nach üblichen Methoden der Dünnschichttechnik oder auch Dickfilmtechnik auf den Sensorkörper 19 fest haftend aufgebracht. Die Dicke der Schichten 21, 22 und ihre Abmessungen in axialer und in Umfangsrichtung hängen von der Art des Einsatzes (Turbine, Strömungsgeschwindigkeit, Heissgastemperatur etc.) ab. Die direkte leitende Verbindung der beiden Heizelemente 12, 13 bzw. Metallschichten 21, 22 an ihrem einen Ende wird durch einen elektrisch leitenden Sensorkopf 23 bewirkt, der vorzugsweise aus Cu besteht und mit den Metallschichten 21, 22 in Verbindung steht bzw. überlappt. An den anderen (freien) Enden der Heizelemente 12, 13 bzw. Metallschichten 21, 22 erfolgt der elektrische Anschluss durch Cu-Drähte, die in den Figuren nicht eingezeichnet sind. Durch die Art der Anordnung und Aufbringung der Heizelemente 12, 13 im Sensor 20 ist eine hohe mechanische Stabilität gewährleistet. Gleichzeitig sind die Heizelemente 12, 13 nahe beieinander und damit demselben Gasstrom ausgesetzt, ohne sich jedoch auf nachteilige Weise thermisch gegenseitig zu beeinflussen.

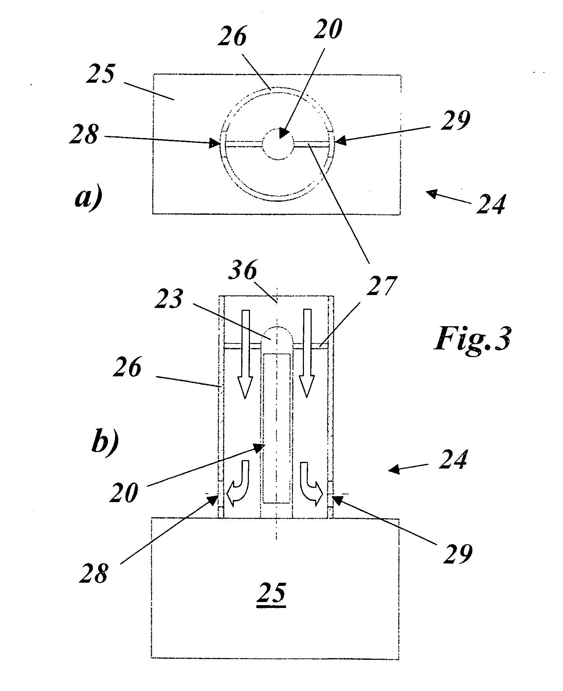

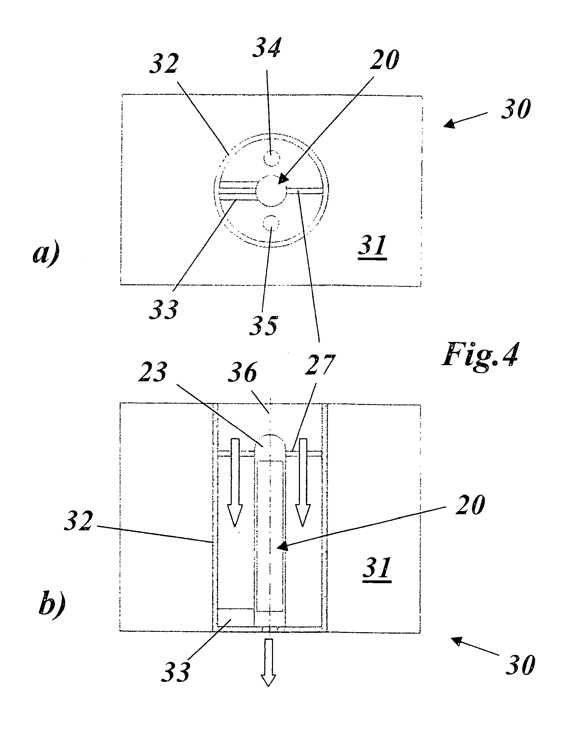

Der Sensor 20 mit den Metallschichten 21, 22 bzw. Heizelementen 12, 13 ist im Einsatz an einem Grundkörper befestigt und von einem Strahlungsschutzschild umgeben, die zusammen einen einbaubaren Temperaturfühler bilden. In den Fig. 3 und 4 sind zwei mögliche Ausgestaltungen eines solchen Temperaturfühlers mit einem Sensor 20 gemäss Fig. 2 wiedergegeben. Beim Temperaturfühler 24 der Fig. 3 ist der Sensor 20 stehend auf der Oberseite eines (quaderförmigen) Grundkörpers 25 befestigt. Er ist konzentrisch von einem Strahlungsschutzschild 26 in Form eines Rohrstücks umgeben. Der Strahlungsschutzschild 26, der in axialer Richtung über den Sensor 20 hinausragt, ist elektrisch leitend ausgebildet, und besteht beispielsweise aus einem Metall, insbesondere Stahl. Er bildet zusammen mit dem zentralen Sensor 20 einen Ringkanal, durch den von oben das zu messende Gas eintritt, am Sensor 20 und den aufgebrachten Heizelementen 12, 13 axial entlangströmt, und durch seitliche Austrittsöffnungen 28, 29 im unteren Teil wieder austritt (siehe die breiten Strömungspfeile in Fig. 3b). Hierdurch wird neben dem Schutz vor Strahlung (und einem mechanischen Schutz) eine Vergleichmässigung der Strömung im Messabschnitt erreicht. Darüber hinaus wird der Strahlungsschutzschild 26 als Erdungsverbindung für den Sensorkopf 23 bzw. die Heizelemente 12, 13 am Punkt G der Messbrücke 11 benutzt. Dazu verlaufen quer durch den Ringkanal Verbindungsleitungen 27 vom Sensorkopf 23 zum Strahlungsschutzschild 26, das seinerseits im Inneren des Grundkörpers 25 angeschlossen ist. Desgleichen sind die Heizelemente 12, 13 an den unteren Enden über nicht gezeigte Zuleitungen, die in den Grundkörper 25 führen, mit der ausserhalb liegenden Messschaltung (Widerstand $R_N$) verbunden. Der Sensorkopf 23 ist im übrigen aus strömungstechnischen Gründen vorzugsweise abgerundet.

Beim Temperaturfühler 30 der Fig. 4 ist der Sensor 20 mit dem konzentrischen Strahlungsschutzschild 32 in einer Durchgangsbohrung eines Grundkörpers 31 untergebracht. Der Strahlungsschutzschild 32 ist oben offen, unten jedoch durch einen Boden verschlossen, in dem Austrittsöffnungen 34, 35 zum Austritt der zu messenden Gase vorgesehen sind. Die elektrische Verbindung der Heizelemente 12, 13 bzw. Metallschichten 21, 22 des Sensors 20 erfolgt am oberen Ende wiederum über den Sensorkopf 23 und mit dem Strahlungsschutzschild 32 verbundene Verbindungsleitungen 27. Am unteren Ende ist ein quer durch den Ringkanal führender Anschlussteil 33 angeordnet, durch den die Zuleitungen zu den Heizelementen 12, 13 aus dem Grundkörper 31 zum Sensor 20 geführt sind.

Zusammenfassend kann zu der Vorrichtung Folgendes gesagt werden: Der Sensor 20 ist Teil eines herausnehmbaren Temperaturfühlers 24 bzw. 30. Der Sensor 20 ist ein zylindrisches Teil, das mit zwei dünnen Platinschichten 21, 22 beschichtet ist, die am einen Ende über einen Sensorkopf 23 aus Cu miteinander in Verbindung stehen. Die Platinschichten sind auf einem nichtleitenden zylindrischen Sensorkörper 19 angeordnet, der beispielsweise aus einer Keramik besteht. Der Sensor 20 sitzt konzentrisch in einem Strahlungsschutzschild 26, 32, um einen Einfluss der thermischen Strahlung von den Wänden der Gasturbine zu verhindern, den Einfluss des Strömungswinkels auf die Messung zu vermeiden und den Sensor vor Teilchen und Schmutz zu schützen. Der Strahlungsschutzschild 26, 32 hat eine Mehrzahl von Öffnungen in seinem Mantel, um die Konvektion zu verbessern und damit die Messgenauigkeit zu erhöhen. Der Sensor ist Teil einer (elektronischen) Schaltungsanordnung, die so ausgelegt ist, dass die Genauigkeit und die Zeitantwort unabhängig voneinander optimiert werden können. Eine besonders wichtige Eigenschaft der Schaltungsanordnung und der darin enthaltenen Regelschaltung ist es, das die Übertragungsfunktion, d.h. das Verhältnis zwischen dem Ausgangssignal und der zu messenden Grösse, linear und unabhängig von der Strömungsgeschwindigkeit des Gases ist. Daraus folgt, dass nur ein Kalibrierungspunkt bzw. Rekalibrierungspunkt notwendig ist. Andere massgebliche Vorteile sind die gegenüber Thermoelementen gute Genauigkeit, die schnelle Signalantwort (Zeitkonstanten von 0,3 s können erreicht werden), und der gegenüber vorbekannten Messfühlern vereinfachte Einbau.

BEZUGSZEICHENLISTE

| 10 | Schaltungsanordnung (Messschaltung) |
|----|-----|
| 11 | Messbrücke |
| 12,13 | Heizelement |
| 14 | Versorgungsanschluss |
| 15,16 | Kondensator |
| 17 | Operationsverstärker |
| 18 | Transistor |
| 19 | Sensorkörper |
| 20 | Sensor |
| 21,22 | Metallschicht (Heizelement) |
| 23 | Sensorkopf |
| 24,30 | Temperaturfühler |
| 25,31 | Grundkörper |
| 26,32 | Strahlungsschutzschild |
| 27 | Verbindungsleitung |
| 28,29 | Austrittsöffnung |
| 33 | Anschlussteil |
| 34,35 | Austrittsöffnung |
| 36 | Achse |
| $R_1$,.., $R_5$, $R_N$ | Widerstand |

**Patentansprüche**

1. Sensor (20) zur schnellen Messung von Temperaturen in einem Heissgasstrom, insbesondere in einer Gasturbine, mittels zweier auf unterschiedliche Temperatur aufgeheizter und gehaltener Heizelemente, **dadurch gekennzeichnet, dass** der Sensor (20) zwei flächige, elektrisch leitende Heizelemente (12, 13) umfasst, welche auf der Oberfläche eines gemeinsamen, elektrisch isolierenden Sensorkörpers (19) angebracht sind.

2. Sensor nach Anspruch 1, **dadurch gekennzeichnet, dass** der Sensorkörper (19) zylindrisch ausgebildet ist und sich entlang einer Achse (36) erstreckt, und dass die Heizelemente (12, 13) auf der Zylinderfläche des Sensorkörpers (19) im Bezug auf die Achse (36) auf gegenüberliegenden Seiten angeordnet sind.

3. Sensor nach Anspruch 2, **dadurch gekennzeichnet, dass** die Heizelemente (12, 13) als längliche, sich in axialer Richtung erstreckende, dünne Schichten (21, 22) ausgebildet sind.

4. Sensor nach Anspruch 3, **dadurch gekennzeichnet, dass** die Heizelemente (12, 13) als dünne Metallschichten (21, 22), insbesondere aus Pt, ausgebildet sind.

5. Sensor nach Anspruch 2, **dadurch gekennzeichnet, dass** die Heizelemente (12, 13) an dem einen Ende miteinander elektrisch leitend verbunden sind.

6. Sensor nach Anspruch 5, **dadurch gekennzeichnet, dass** der Sensorkörper (19) an dem einen Ende durch einen elektrisch leitenden Sensorkopf (23), insbesondere aus Cu, abgeschlossen ist, und dass die Heizelemente (12, 13) über den Sensorkopf (23) miteinander elektrisch leitend verbunden sind.

7. Sensor nach einem der Ansprüche 1 bis 6, **dadurch gekennzeichnet, dass** der Sensorkörper (19) aus einer Keramik besteht.

8. Sensor nach Anspruch 2, **dadurch gekennzeichnet, dass** der Sensor (20) mit Abstand konzentrisch von einem Strahlungsschutzschild (26, 32) umgeben ist, welcher zusammen mit dem Sensor (20) einen Ringkanal bildet, durch den das zu messende Gas an den Heizelementen (12, 13) vorbeigeführt wird.

9. Sensor nach Anspruch 6 und 8, **dadurch gekennzeichnet, dass** der Strahlungsschutzschild (26, 32) elektrisch leitend ausgebildet ist und zur Erdung des Sensorkopfes (23) mit dem Sensorkopf (23) elektrisch leitend verbunden ist.

10. Sensor nach Anspruch 8, **dadurch gekennzeichnet, dass** der Ringkanal an einem Ende geschlossen ist, dass das zu messende Heissgas durch das offene Ende in den Ringkanal eintritt, und dass am geschlossenen Ende des Ringkanals Austrittsöffnungen (28, 29; 34, 35) im Strahlungsschutzschild (26, 32) für den Austritt des Heissgases vorgesehen sind.

11. Messvorrichtung mit einem Sensor (20) nach einem der Ansprüche 1 bis 10, **dadurch gekennzeichnet, dass** die Heizelemente (12, 13) am einen Ende direkt und am anderen Ende über einen ersten Widerstand ($R_N$) miteinander leitend verbunden sind, und dass die Schaltung aus den Heizelementen (12, 13) und dem Widerstand ($R_N$) einen Zweig einer Messbrücke (11) bildet.

12. Messvorrichtung nach Anspruch 11, **dadurch gekennzeichnet, dass** die Messbrücke (11) Teil einer Schaltungsanordnung (10) ist, welche den Widerstand in dem Zweig der Messbrücke (11) konstant hält, der aus den Heizelementen (12, 13) und dem ersten Widerstand ($R_N$) besteht.

13. Messvorrichtung nach Anspruch 12, **dadurch gekennzeichnet, dass** die Schaltungsanordnung (10) eine Regelschaltung (17,18) umfasst, welche den Strom in einer Brückendiagonalen so einregelt, dass die Spannungsdifferenz in der anderen Brückendiagonalen verschwindet.

**Claims**

1. Sensor (20) for the rapid measurement of temperatures in a hot gas flow, in particular in a gas turbine, by means of two heating elements heated to and kept at different temperatures, **characterized in that** the sensor (20) comprises two two-dimensional, electrically conductive heating elements (12, 13), which are attached to the surface of a common, electrically insulating sensor body (19).

2. Sensor according to Claim 1, **characterized in that** the sensor body (19) is cylindrical and extends along an axis (36), and **in that** the heating elements (12, 13) are arranged on opposite sides of the cylinder surface of the sensor body (19) in relation to the axis (36).

3. Sensor according to Claim 2, **characterized in that** the heating elements (12, 13) are in the form of elongate, thin layers (21, 22) extending in the axial direction.

4. Sensor according to Claim 3, **characterized in that** the heating elements (12, 13) are in the form of thin metal layers (21, 22), in particular made from Pt.

5. Sensor according to Claim 2, **characterized in that** the heating elements (12, 13) are electrically conductively connected to one another at one end.

6. Sensor according to Claim 5, **characterized in that** the sensor body (19) is terminated at one end by an electrically conductive sensor head (23), in particular made from Cu, and **in that** the heating elements (12, 13) are electrically conductively connected to one another via the sensor head (23).

7. Sensor according to one of Claims 1 to 6, **characterized in that** the sensor body (19) is made from a ceramic.

8. Sensor according to Claim 2, **characterized in that** the sensor (20) is surrounded concentrically, at a distance, by a radiation shield (26, 32), which forms an annular channel together with the sensor (20), the gas to be measured being passed through said annular channel past the heating elements (12, 13).

9. Sensor according to Claim 6 and 8, **characterized in that** the radiation shield (26, 32) is electrically conductive and is electrically conductively connected to the sensor head (23) for the purpose of earthing the sensor head (23).

10. Sensor according to Claim 8, **characterized in that** the annular channel is closed at one end, **in that** the hot gas to be measured enters the annular channel through the open end, and **in that** outlet openings (28, 29; 34, 35) are provided in the radiation shield (26, 32) at the closed end of the annular channel for the emergence of the hot gas.

**11.** Measurement apparatus having a sensor (20) according to one of Claims 1 to 10, **characterized in that** the heating elements (12, 13) are conductively connected to one another directly at one end and via a first resistor ($R_N$) at the other end, and **in that** the circuit comprising the heating elements (12, 13) and the resistor ($R_N$) forms a branch of a measurement bridge (11).

**12.** Measurement apparatus according to Claim 11, **characterized in that** the measurement bridge (11) is part of a circuit arrangement (10), which keeps the resistance in the branch of the measurement bridge (11) constant, said branch comprising the heating elements (12, 13) and the first resistor ($R_N$).

**13.** Measurement apparatus according to Claim 12, **characterized in that** the circuit arrangement (10) comprises a closed-loop control circuit (17, 18), which adjusts the current in a bridge diagonal such that the voltage difference in the other bridge diagonal disappears.

**Revendications**

**1.** Détecteur (20) de mesure rapide de températures dans un écoulement de gaz chaud, en particulier dans une turbine à gaz, au moyen de deux éléments chauffants chauffés et maintenus à des températures différentes, **caractérisé en ce que** le détecteur (20) comprend deux éléments chauffants (12, 13) plats et électriquement conducteurs appliqués sur la surface d'un corps commun de détecteur (19) électriquement isolant.

**2.** Détecteur selon la revendication 1, **caractérisé en ce que** le corps (19) du détecteur a une configuration cylindrique et s'étend le long d'un axe (36) et **en ce que** les éléments chauffants (12, 13) sont disposés sur la surface cylindrique du corps (19) du détecteur sur les côtés opposés par rapport à l'axe (36).

**3.** Détecteur selon la revendication 2, **caractérisé en ce que** les éléments chauffants (12, 13) sont configurés comme minces couches (21, 22) allongées qui s'étendent dans la direction axiale.

**4.** Détecteur selon la revendication 3, **caractérisé en ce que** les éléments chauffants (12, 13) sont configurés comme minces couches métalliques (21, 22), en particulier en Pt.

**5.** Détecteur selon la revendication 2, **caractérisé en ce qu'**à une de leurs extrémités, les éléments chauffants (12, 13) sont reliés l'un à l'autre de manière électriquement conductrice.

**6.** Détecteur selon la revendication 5, **caractérisé en ce qu'**à l'une de ses extrémités, le corps (19) du détecteur se termine par une tête de détecteur (23) électriquement conductrice, en particulier en Cu, et **en ce que** les éléments chauffants (12, 13) sont reliés l'un à l'autre de manière électriquement conductrice par l'intermédiaire de la tête de détecteur (23).

**7.** Détecteur selon l'une des revendications 1 à 6, **caractérisé en ce que** le corps (19) du détecteur est constitué de céramique.

**8.** Détecteur selon la revendication 2, **caractérisé en ce que** le détecteur (20) est entouré concentriquement et à distance par un écran (26, 32) de protection contre le rayonnement qui forme avec le détecteur (20) un canal annulaire par lequel le gaz à mesurer est passé le long des éléments chauffants (12, 13).

**9.** Détecteur selon les revendications 6 et 8, **caractérisé en ce que** l'écran (26, 32) de protection contre le rayonnement est électriquement conducteur et est relié de manière électriquement conductrice à la tête (23) du détecteur pour relier la tête (23) du détecteur à la terre.

**10.** Détecteur selon la revendication 8, **caractérisé en ce que** le canal annulaire est fermé à une extrémité, **en ce que** le gaz chaud à mesurer pénètre dans le canal annulaire par l'extrémité ouverte et **en ce que** des ouvertures de sortie (28, 29; 34, 35) sont prévues dans l'écran (26, 32) de protection contre le rayonnement à l'extrémité fermée du canal annulaire pour laisser sortir le gaz chaud.

**11.** Dispositif de mesure qui présente un détecteur (20) selon l'une des revendications 1 à 10, **caractérisé en ce que** les éléments chauffants (12, 13) sont reliés l'un à l'autre de manière conductrice, directement à une extrémité et par l'intermédiaire d'une première résistance ($R_N$) à l'autre extrémité, et **en ce que** le circuit constitué des éléments chauffants (12, 13) et de la résistance ($R_N$) forment une branche d'un pont de mesure (11).

12. Dispositif de mesure selon la revendication 11, **caractérisé en ce que** le pont de mesure (11) fait partie d'un circuit (10) qui maintient constante la résistance dans la branche du pont de mesure (11) qui est constituée des éléments chauffants (12, 13) et de la première résistance ($R_N$).

13. Dispositif de mesure selon la revendication 12, **caractérisé en ce que** le circuit (10) comprend un circuit de régulation (17, 18) qui régule le courant dans une diagonale du pont de telle sorte que la différence de potentiel s'annule sur l'autre diagonale du pont.

*Fig.1*

*a)*

21

23

19

20

22

36

*Fig.2*

*b)*

22

21

*19*

20

Fig.3

*Fig.4*

**EP 1 650 539 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6609412 B2